# EUROPEAN PATENT APPLICATION

(11) **EP 2 244 088 A1**
(43) Date of publication of application: **27.10.2010**
(21) Application number: 09005605.2
(22) Date of filing: 22.04.2009
(51) Int. Cl.: G01N 27/12

(54) **Electrical device**

(71) Applicant: ETH Zurich, 8092 Zürich (CH)
(72) Inventor: Tricoli, Antonio, 8032 Zürich (AT); Pratsinis, Sotiris E., 8032 Zürich (AT)

(57) **Abstract**

The present invention relates to an electrical device comprising a substrate, a pair of electrodes arranged on the substrate and a functional layer arranged between the pair of electrodes, said functional layer comprising a functional domain being capable of transforming an external stimulus into an electrical signal or vice versa. The electrical device is **characterized in that** at least two conductive domains are dispersed in the functional layer. Said at least two conductive domains are separated from each other and are formed in each case by a particle or an agglomerate of particles of a conducting or semiconducting material having a higher electrical conductivity than the material of the functional domain. Each of the conductive domains form an electrically conductive path on the functional domain.

## Description

The present invention relates to an electrical device, according to claim 1, and in particular to a micro- or nano-device, to a process for preparing the electrical device, according to claim 12, as well as to the use of the electrical device in an electrical circuit, according to claim 15, and in particular in a gas sensor, a solar cell, an actuator, a fuel cell or a battery.

In the past years, there has been a permanent effort to integrate nanoparticles in electrical devices and in particular in the functional material, i.e. the material that is capable of transforming an external stimulus into an electrical signal. Decreasing the size of the functional material particles to the nanoscale has not only allowed for a miniaturization of the device's dimensions but also for a substantial increase of its functionality, leading to a revolution in size and performance of several electrical devices, such as sensors, solar cells, batteries and fuel cells.

However, decreasing the size of the functional material particles has also been found to go along with a great decrease in their electrical conductivity due to an increase in the density of surface energy barriers and boundaries. This opposite trend between size and conductivity is a main limitation to further down-scale the size of devices where the electrical conductivity determines the efficiency or the industrial feasibility.

For solar cells, for example, it was demonstrated that although their performance can be greatly increased using TiO₂ nanoparticles having a high specific surface, their efficiency is limited due to electrical losses in the nanostructured functional layer. Similarly, it was found that the stability of lithium-manganese batteries can be increased using LiMn₂O₄ nanoparticles in a carbon network, but the high mass of carbon required due to the low conductivity of the nanoparticles drastically reduces the specific capacity of the composite.

For gas sensors, it was found that the sensitivity was drastically increased using a wide band gap semiconducting material, in particular SnO₂ particles, having a grain size below 10 nm. A process for preparing a highly porous gas-sensing film based on SnO₂ is for example described by L. Mädler et al., Sensors and Actuators B-Chemical 2006, 114, 283-295, relating to an in situ thermophoretic deposition of respective flame-made nanoparticles. Similarly, T. Sahm et al., Journal of Materials Research 2007, 22, (4), 850-857, disclose a method of forming a multilayer film for gas sensing by thermophoretic nanoparticles. As further disclosed by A. Tricoli et al., Advances Materials 2008, 20, (16), 3005-3010, a noble-metal precursor can be present in the precursor spray solution of the target species SnO₂, leading to noble metal cluster formation on top of the metal oxide surface.

However, despite of the gas sensors' high sensitivity obtained by the introduction of (noble-metal doped) SnO₂ nanoparticles, the extremely high resistance of the functional layer undermines their commercial application. The poor conductivity of nanoparticles poses a huge challenge in the preparation of electrical micro-devices.

In conventional micro-devices, the minimal resistance is mainly determined by the minimal electrodes distance and area ratio. This limitation is particularly restrictive when wide band gap semiconductors are necessary or when the functional layer is highly porous.

In order to overcome the poor conductivity, it has been suggested to sinter the functional layer or to dope the material of the functional layer in an appropriate manner. Both approaches have the disadvantage that the performance of the functional layer can be deteriorated. In gas sensors, for example, sintering of the functional layer has been shown to result in an increase of the grain size of the functional material particles, leading to a decrease in sensor sensitivity. According to another approach, a high current carry capacity has been aimed at by a dense, thin film of aligned carbon nanotubes between electrodes, as described by S.J. Kang, et al., Nat Nano, 2007, 2, 230. However, this approach is relatively complex. Furthermore, it is not suitable for a porous functional layer, as for example required for a highly sensitive gas sensor.

The problem of the present invention is thus to provide an electrical device which allows for using functional material particles in nanoscale and thus for a high functionality and a potential miniaturization of the device, and which at the same time provides for a high conductivity of the functional layer and thus for a high efficiency.

The problem is solved by the electrical device according to claim 1. Preferred embodiments are given in the dependent claims.

The electrical device of the present invention comprises at least one pair of electrodes. Both macro- or micro-electrodes are possible. Although not mandatory for the present invention, the electrodes are typically connected to a power supply unit.

The electrodes are arranged on a substrate, which in general is electrically isolating. Between the electrodes, a functional layer is arranged on the substrate. Said functional layer comprises a functional domain, which is capable of transforming an external stimulus into an electrical signal or vice versa.

According to the invention, at least two conductive domains are dispersed in the functional layer. These at least two conductive domains are separated from each other and are formed in each case by a particle or an agglomerate of particles of a conducting material or a semiconducting material having a higher electrical conductivity than the material of the functional domain. Each of these conductive domains forms an electrically conductive path on the functional domain.

The conductive domains can thus be looked at as "nano-electrodes" dispersed in the functional layer. These nano-electrodes are generally arranged randomly and in close proximity to each other, leading to a reduction of the total resistance in comparison to that of the functional layer without nano-electrodes. As the conductive domains are separated from each other, they do not form a continuous electrical path between the electrodes. Thus, the functional domain is not shunted, ensuring that the functionality of the device is maintained.

According to the present invention, an electrical device is achieved which provides for a high conductivity of the functional layer also when integrating nanoparticles. Given the high functionality and the potential for miniaturization when using nanoparticles, the present invention allows for obtaining highly functional electrical micro-devices. In these, the electrical losses are vastly reduced compared to conventional micro-devices.

As a further advantage of the present invention, any substrate can be provided with the dispersed nano-electrodes. This is of particular importance when applying the dispersed nano-electrodes on the top of a functional layer having a high porosity, as it is for example required for a highly sensitive gas sensor.

The expression that the at least two conductive domains are dispersed "in" the functional layer is not to be interpreted narrowly. In particular, the conductive domains can be arranged on the top or bottom surface of the functional layer, as will be discussed in detail below. One or more functional domains can be provided in the functional layer.

In general, the functional domain comprises particles of a semiconducting material (different from the conductive domain semiconducting material). For a semiconductor gas sensor, for example, the functional domain typically comprises a metal oxide, such as SnO₂, the conductivity of which is changed upon reaction with the analyte to be detected, typically carbon monoxide (CO) or ethanol (EtOH). Apart from SnO₂, other particularly useful sensing materials include TiO₂, ZnO, In₂O₃, LiMn₂O₄ and WO₃. For a solar cell, the functional domain typically comprises TiO₂ together with a ruthenium metalorganic dye as light-absorbing material.

In particular, the particles of the functional domain according to the present invention have a grain size, i.e. an average diameter ranging from 5 to 100 nm, thus forming nanoparticles. As mentioned above, the functionality of the device is substantially increased by the integration of nanoparticles. With regard to gas sensors, for example, a high specific surface of the gas-sensing functional domain is achieved which results in a very high sensitivity of the sensor.

According to a preferred embodiment, the particles of the conductive domains have an average diameter ranging from 3 to 50 nm. Due to their small size, the conductive domain particles generally do not interfere with the functionality of the device. In solar cells, for example, conductive domain particles having an average diameter of less than about 10 nm can be used, which do not interfere with the light-absorbing properties of the cell.

In accordance with the above, the electrical device of the present invention is preferably a micro- or nano-device, thus combining the improved functionality and efficiency of the device with a miniaturization of its dimensions. Depending on its purpose of use, the thickness of the device's functional layer can vary. For example, it is possible to further decrease the resistance within certain limitations by increasing the thickness of the layer. This is, however, only expedient in exceptional cases as maximal functionality is generally obtained by the thinnest layers. Preferably, the functional layer has a bulk thickness of less than 1000 nm.

As mentioned above, the functional domain of a gas sensor preferably comprises SnO₂, more preferably SnO₂ crystals having an average diameter in the order of about 10 nm, due to this material's high sensitivity to the analyte.

The particles of the conductive domains are preferably made of a metal, such as silver (Ag), gold (Au) or platinum (Pt), and/or a narrow band gap metal oxide, such as copper oxide (CuO). Depending on the intended purpose, other suitable materials can be used.

The present invention further relates to a process for preparing an electrical device as described above, said process comprising the steps of
a) providing a substrate,
b) producing a vapour and/or an aerosol of the particles of the conductive domains,
c) producing a vapour and/or an aerosol of the particles of the functional domains, and
d) forming a functional layer by depositing the particles of the conductive domains and of the functional domain on the substrate.

Preferably, the vapour and/or the aerosol is produced by flame spray combustion and/or flame spray pyrolysis of a precursor of the material of the conductive and/or the functional domain.

The particles of the conductive domains are deposited either after or prior to deposition of the functional domain. In the former case, a so-called "top layout" is formed, while in the latter case, a "bottom layout" is formed. In the top layout, the functional domain is arranged between the substrate and the conductive domains, the latter being thus not in direct contact with the substrate and the electrodes arranged thereon. In the bottom layout, the conductive domains are arranged between the substrate and the functional domain and thus in direct contact with the substrate.

Depending on the field of application, a top layout or a bottom layout may be preferred. In this regard, it has been found that the bottom layout is particularly preferred for applications in which the functionality of the device is governed by the exposed surface of the functional domain. This applies for example for gas sensors in which the analyte to be detected produces an electrical signal by binding to the surface of the functional domain.

In order to increase the mechanical stability of the functional domain and/or the conductive domains, they can be subjected to an *in situ* annealing step after deposition on the substrate.

A specific process for preparing the electrical device of the present invention is given in the following example:

### Example

### Particle and Layer Synthesis

A flame spray pyrolysis (FSP) reactor was used in combination with a temperature controlled substrate holder (120 °C) for synthesis and direct deposition of SnO₂, CuO and Ag nanoparticle multi - domains onto Al₂O₃ substrates featuring a set of interdigitated gold electrodes and a sensing area of 1 cm², as described by A. Tricoli, et al., Adv. Funct. Mater., 2008, 18, 1969. After deposition of the final domain, the resulting layer was mechanically stabilized by *in-situ* annealing with a xylene-fed spray flame, as described by A. Tricoli et al., Adv. Mater., 2008, 20, 3005. The functional SnO₂ nanoparticle domains were obtained by spraying and combusting tin (II) - ethylhexanoate (Aldrich, purity > 98%) diluted in xylene with a total metal atom concentration of 0.5 M. The thick (> 10 nm bulk thickness) CuO conductive domains were obtained by spraying 0.5 M copper (II) 2 - ethylhexanoate (Sigma Aldrich) in xylene (Fluka, purity > 98 %) while the thin were obtained by spraying 0.01M Soligen® Copper 8 (OMG Borchers GmbH) in ethanol (Fluka, purity > 98 %). The Ag conductive domain was obtained by spraying 0.01M AgNO₃ (Sigma Aldrich) in an isovolumetric mixture of ethanol (Fluka, purity > 98 %) and ethylhexanoic acid (Sigma Aldrich, purity > 98%). The spray was formed by feeding 5 ml/min of the precursor solution through a nozzle and dispersing it with 5 1/min of oxygen (Pan Gas, 99.5 %) by a constant pressure drop of 1.5 bar at the nozzle outlet. This spray was ignited by an annular premixed methane/oxygen flame (CH₄ = 1.5 1/min and O₂ = 3.2 1/min) surrounding the nozzle. Additionally 5 1/min of oxygen were supplied by a surrounding porous ring to assure overstoichiometric combustion conditions. The substrate were placed 20 cm height above the nozzle (HAN) and the temperature was kept at 120 °C by cooling with water during film deposition. For stabilization the substrate was lowered at 14 cm HAN and *in-situ* annealed with an impinging xylene spray- flame fed at 12 ml/min for 30 s.

### Particles and Layer Characterization

During deposition the particles were collected on a glass fiber filter placed downstream of the substrate holder. Their X-ray diffraction patterns were obtained by a Bruker, AXS D8 Advance diffractometer operated at 40 kV, 40 mA at 2θ (Cu Kα) = 150 - 75 °, step = 0.03 ° and scan speed = 0.6 °/min. The crystal size (d_{XRD}) was determined using the Rietveld fundamental parameter method with their structural parameters known to the person skilled in the art. The powder specific surface area (SSA) was measured by BET analysis using a Micromeritics Tristar 3000. The BET equivalent diameter was calculated using the density of SnO₂ (6.85 g/cm³), CuO (6.46 g/cm³) and Ag (10.49 g/cm³). Transmission electron microscopy was conducted in a Hitachi H600, operated at 100 kV. The morphology, patterning characteristics and thickness of the deposited layers were investigated by SEM with a LEO 1530 Gemini

(Zeiss/LEO, Oberkochen) and a Tecnai F30 microscope (FEI (Eindhoven); field emission cathode, operated at 300 kV). The sensor measurements were performed as described in detail by A. Teleki et al., Sens. Actuatros, B, 2006, 119, 683. The analyte mixture was EtOH (105 ppm ± 3% synthetic air, Pan Gas 5.0) in synthetic air (20.8%± 2% O₂ rest nitrogen, Pan Gas 5.0). The temperature was measured with a n-type thermocouple 0.02.

The present invention is further illustrated by the attached Figures of which
Fig. 1 is a schematic representation of the layout of a conventional electrical device with a functional film of nanoparticles according to the state of the art;
Fig. 2a is a schematic representation of the layout of an electrical device according to the present invention with the conductive domains on the top surface of the functional layer ("top layout");
Fig. 2b is a schematic representation of the layout of an electrical device according to the present invention with the conductive domains on the bottom surface of the functional layer ("bottom layout");
Fig. 3 shows a graphical representation of the resistance of an SnO₂ based macro-electrodes gas sensor in relation to the SnO₂ bulk thickness ("BT");

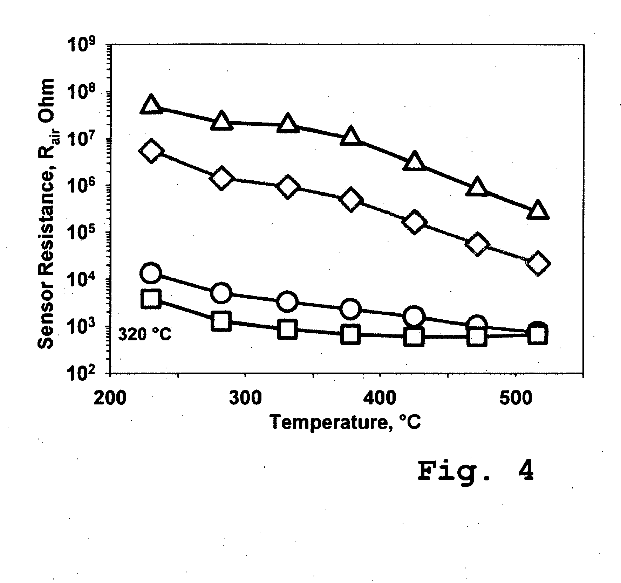

Fig. 4 shows a graphical representation of the resistance of an SnO₂ based macro-electrodes gas sensor in relation to the temperature for four different functional layers, i.e. a first comprising an SnO₂ functional domain having a bulk thickness of 100 nm (triangles), a second having additional CuO conductive domains having a bulk thickness of 100 nm (diamonds), a third having additional CuO conductive domains having a bulk thickness of 600 nm (circles), and a fourth having an SnO₂ functional domain having a bulk thickness of 50 nm and additional CuO conductive domains having a bulk thickness of 600 nm (squares);

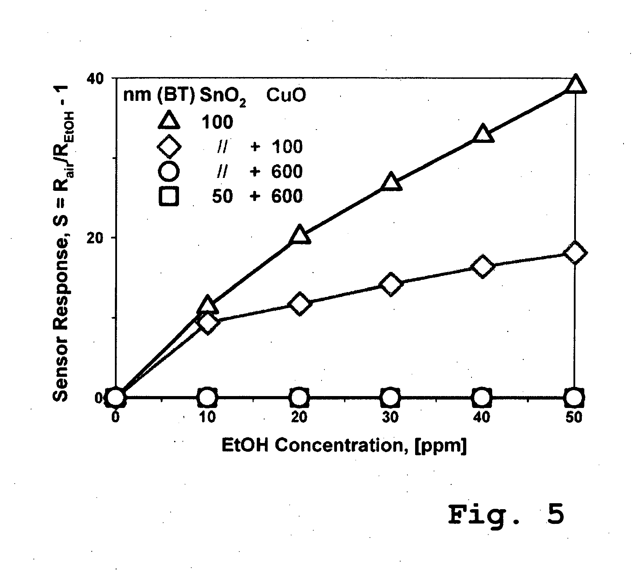

Fig. 5 shows a graphical representation of the response of an SnO₂ based macro-electrodes gas sensor in relation to the concentration of the analyte EtOH for four different functional layers, i.e. a first comprising an SnO₂ functional domain having a bulk thickness of 100 nm (triangles), a second having additional CuO conductive domains having a bulk thickness of 100 nm (diamonds), a third having additional CuO conductive domains having a bulk thickness of 600 nm (circles), and a fourth having an SnO₂ functional domain having a bulk thickness of 50 nm and additional CuO conductive domains having a bulk thickness of 600 nm (squares);
Fig. 6 shows a graphical representation of the resistance of an SnO₂ based macro-electrodes gas sensor having CuO conductive domains but no functional domain in relation to the bulk thickness of the conductive domains (triangles) in comparison to the sensor resistance of a respective gas sensor with an additional SnO₂ functional domain having a thickness of 50 nm (circles); and
Fig. 7 shows a graphical representation of the response of an SnO₂ based macro-electrodes gas sensor in relation to the concentration of the analyte EtOH for three different functional layers, i.e. a first having only a SnO₂ functional domain with a thickness of 50 nm, a second having an additional CuO conductive domain with a bulk thickness of 1.1 nm and a third having an additional CuO conductive domain with a bulk thickness of 4.5 nm.

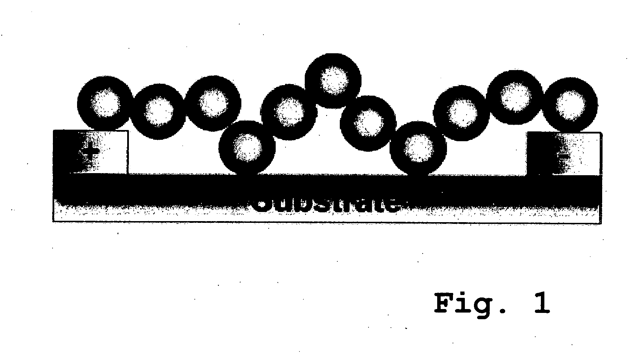

As shown in Fig. 1, a conventional electrical device comprises a substrate and a pair of electrodes, i.e. an anode designated by "+" and a cathode designated by "-", arranged on the substrate. A functional layer of nanoparticles is arranged between the electrodes on the substrate. For example, interdigitated macro-electrodes sputtered on an alumina substrate can be used. Other configurations, such as micro-electrodes micro-machined on Si-wafers are also possible. In case of a gas sensor, the nanoparticles are typically SnO₂ crystals. These crystals form a continuous layer connecting the two electrodes.

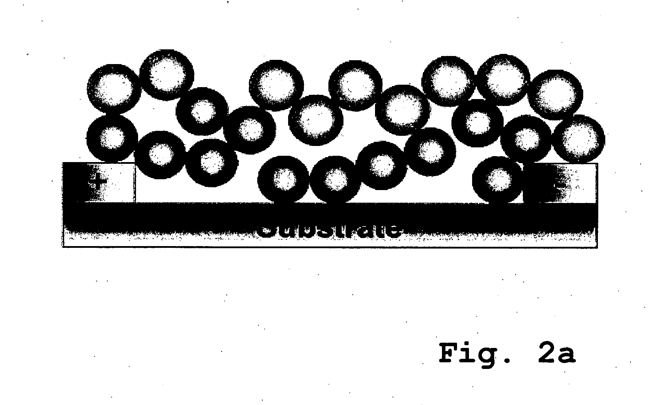

In the embodiment shown in Fig. 2a, the nanoparticles of the conductive domains (shown in light grey) are arranged on the top surface of the layer. According to the scheme of Fig. 2a, the functional layer comprises a functional domain formed by twelve nanoparticles (shown in dark grey), said functional domain being in direct contact with the cathode. On the top surface, the functional layer comprises (according to the scheme) two conductive domains which are separated from each other. The first conductive domain is formed by an agglomerate of two nanoparticles, while the second is formed by an agglomerate of eight nanoparticles, said second conductive domain being in direct contact with the cathode. Due to the fact that the conductive domains, all of which form an electrically conductive path on the functional domain, do not form a continuous electrical path connecting the electrodes, the current is forced through at least part of the functional domain.

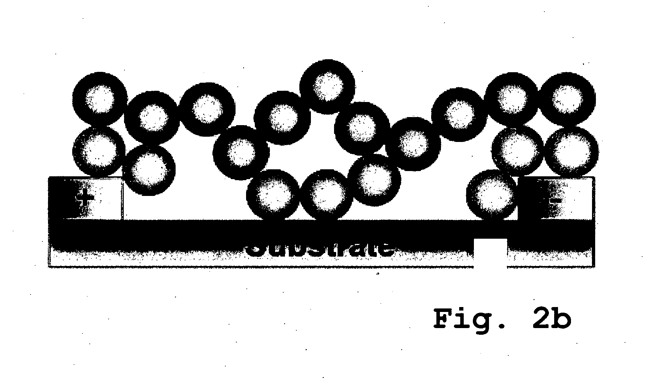

In the embodiment shown in Fig. 2b, a functional domain formed of thirteen nanoparticles (shown in dark grey) is provided. Between the functional domain and the substrate, three conductive domains (shown in light grey) are provided; a first being formed by two nanoparticles, and a second and a third each being formed by three nanoparticles. The first and the third conductive domain are in direct contact with the electrodes. Also in this embodiment, the conductive domains are separated from each other, each of them forming an electrically conductive path on the functional domain. Thus, the electrodes are not connected by a continuous electrical path of conductive domains, forcing the current to be transmitted through at least a part of the functional domain.

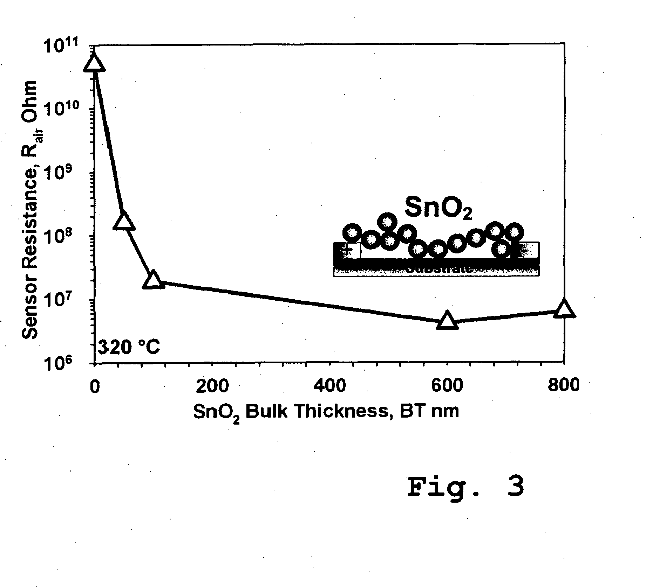

Fig. 3 shows the characterization of a macro-electrode gas sensor based on a highly performing SnO₂ sensing layer for the detection of CO and EtOH. The functional layer was deposited on the substrates by an orthogonal impinging aerosol of SnO₂ nanoparticles, according to the method described above. After deposition of 100 nm bulk thickness, the substrate surface is coated by a continuous layer. The nanoparticles form agglomerated structures which bridge and form closed electrical paths between the macro - electrodes.

According to Fig. 3, the sensor resistance decreases asymptotically from 5·10⁴ to 8 MOhm when the layer thickness is linearly increased. This asymptotically value of 8 MOhm is not universal and depends from the electrodes geometry and layer temperature. Nevertheless, the layer resistance is not inversely proportional to the layer thickness and cannot be estimated by the simple geometric theory. In fact, the conductivity of a nanostructured, highly porous layer is approximated by several parallel and serial resistances. Increasing the layer thickness does not only increase the number of parallel resistances but also the series resistances thereby limiting the layer resistance toward an asymptotic value (here 8 MOhm).

Although it is according to Fig. 3 possible to decrease the sensor resistance by increasing the film thickness, such an approach is limited. Furthermore, this is often not feasible as the best performances of the gas sensor are obtained by the thinnest films which in turn have the highest resistance and cannot be easily integrated in portable devices. In the gas sensor according to Fig. 3, the sensor response to 50 ppm EtOH was doubled by decreasing the thickness from 600 to 50 nm (not shown). Without any intention to be bound by the theory, these results can be explained by a higher penetration of the analyte in thin layers than in thick ones.

The effect of the conductive domain thickness on the sensor resistance in the top layout embodiment is depicted in Fig. 4 in combination with Fig. 3. After deposition of CuO conductive domain particles having a bulk thickness of 100 nm, the sensor resistance is decreased by at least 1 order of magnitude at all temperatures. By increasing the conductive domain thickness from 100 to 600 nm, the sensor resistance is decreases by 2 to 3 orders of magnitude. These low sensor resistances (< 10⁷ Ohm) are convenient for portable micro-gas sensors as they reduce the power consumption required to heat the layer at convenient temperatures (< 350 °C) and are compatible with standard electronic micro - circuitry. These resistances could not be reached by merely increasing the SnO₂ thickness of the aerosol deposited layers according Fig. 3 and would have required a drastic change of the electrodes geometrical factor (area/distance ratio).

The effect of the conductive domain thickness on the sensor response in the top layout embodiment is illustrated in Fig. 5. After deposition of CuO conductive domain particles having a bulk thickness of 100 nm the sensor response to EtOH is decreased about 2.5 times. By increasing the conductive domain thickness to 600 nm, the sensor response is drastically decreased at any EtOH concentration. This drastic effect on the sensing performance is attributed to the catalytic combustion of EtOH by the top CuO conductive domains which decreases drastically the amount of analyte reaching the SnO₂ sensing layer. As several conductive nanoparticles such as silver, platinum, gold and copper-oxide tend to have high catalytic activity, it is challenging to achieve both low resistance and maximal sensing performance in the top layout embodiment.

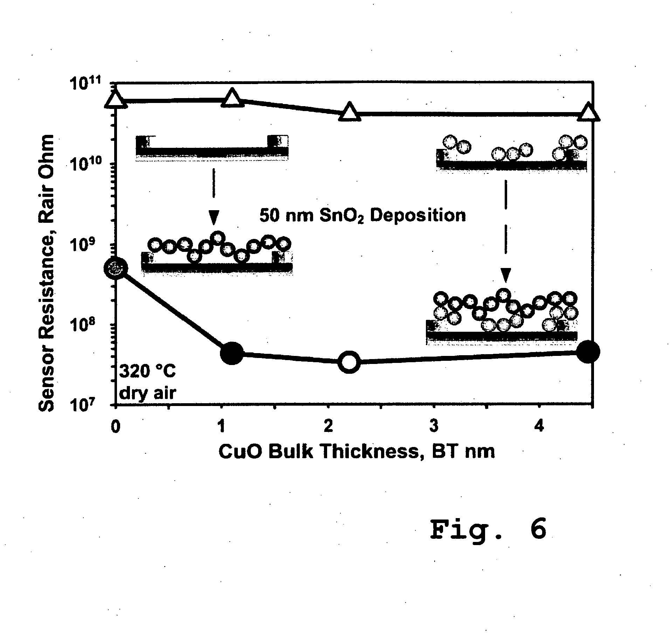

Fig. 6 shows the electrical characterization of such a bottom layout embodiment of an SnO₂ based gas sensor with CuO particles as semi-conducting particles of the conductive domains. In this embodiment, the conductive domains having a bulk thickness of 1.1 nm are deposited homogenously on an Al₂O₃ based substrate following the shape of its surface. Thus, a discontinuous layer of conductive domains is formed corresponding to an ideal open electrical circuit. Consequently, the functional domain (which is deposited on the conductive domain such that the conductive domain is arranged between the substrate and the functional domain) is not shunted. A small SnO₂ thickness (about 50 nm) has been chosen to obtain the highest sensitivity.

According to Fig. 6, the measured resistance decreases only slightly from 6 to 4·10¹⁰ Ohm by the deposition of 2.3 nm CuO, indicating that the CuO particles improve the conductivity of the substrates. Nevertheless, this resistance is only 1/3 smaller than that of the bare substrates and it cannot be concluded that a continuous electrical path ("closed circuit") is formed between the macro-electrodes. Furthermore, by increasing the thickness to 4.5 nm the resistance is not decreased. A continuous electrical path is detected only after deposition of 9 nm CuO (not shown) when a resistance of 2·10¹⁰ Ohm is measured. It should be noticed that even if a "closed circuit" is formed such high resistances (> 10¹⁰ Ohm) are plausible as the bulk thickness of the CuO conductive domain is only 9 nm and the CuO contact surface is much smaller than in dense layers due to the particulate shape of the deposited material. In fact, increasing the CuO conductive domain thickness to 50 nm decreases the sensor resistance to 10³ Ohm.

The electrical circuit was closed by the deposition of a 50 nm SnO₂ functional domain on the top of the bare substrate or of the CuO conductive domains. After this SnO₂ deposition, the sensor resistance decreases by 2 orders of magnitudes for the former and by 3 for the latter confirming formation a continuous conductive path. Increasing the CuO thickness from 1.1 to 4.5 nm does not result in a significant decrease of the sensor resistance. Nevertheless, it is understandable that the sensor resistance depends from the CuO conductive domain morphology and it is not linear with its thickness as domains deposited in the diffusion limited regime have an inhomogeneous density profile. At this low conductive domain thickness, the interface between the thick SnO₂ domain and the thin CuO domain is the main responsible factor for the sensor resistance.

As a very important result it is to be noted that in the bottom layout embodiment a thickness of the conductive domain of 1.1 nm suffices to decrease the sensor resistance up to 1 order of magnitude while in the top layout embodiment at least 100 nm are necessary to obtain a similar effect.

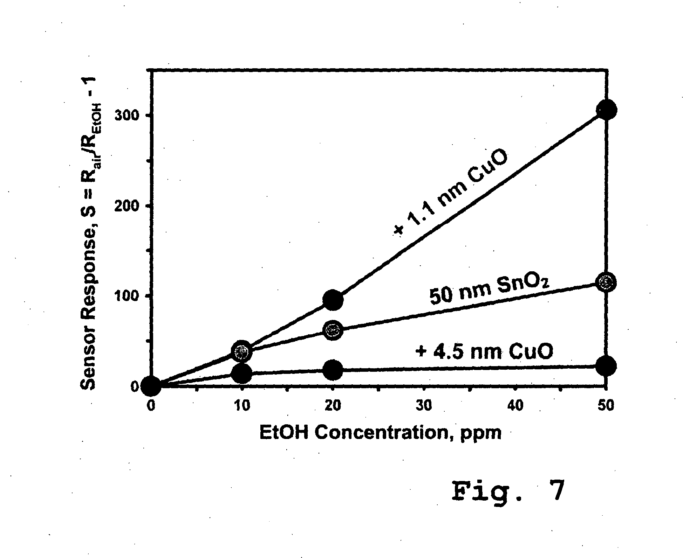

The lower conductive domain thickness in the bottom layout embodiment has important implications on the sensor response, as shown in Fig. 7. In fact, the response of the bottom layout embodiment having a conductive domain thickness of 1.1 nm was up to 2.7 and 16 times higher than that of the pure SnO₂ and that of the top layout embodiment having a conductive domain thickness of 100 nm, respectively. Increasing the bottom conductive domain thickness to 4.5 nm decreases the sensor response to ethanol from 306 to 31.

In summary, it was shown that the electrical properties of highly resistive nanoparticle layers can be controlled by deposition of conductive domains above or below the functional film. Here, the potentialities of this approach were investigated for solid state sensors made of highly sensitive SnO₂ particles. The resistance of such sensors was decreased up to 3 orders of magnitudes by top deposition of 600 nm bulk thickness of CuO particles. Although for sensor applications top layout conductive domains decreased the sensing performance due to catalytic combustion of the analyte, this is not a limiting factor for other applications such as dye-sensitized solar cells. Bottom deposition of the conductive domains decreased the sensor resistance of 1 order of magnitude already at 1.1 nm CuO bulk thickness. This led to assembly of ultra thin solid state gas sensor with extremely high sensitivity to ethanol. Nevertheless, increasing the bottom CuO thickness shunted the functional SnO₂ domain. Therefore, it is necessary to accurately control the deposition rate. Finally, the applications of these conductive domains are not limited to gas sensor but include all device where electrical conduction play an important role such as batteries, micro/nano - circuitries, solar and fuel cells.

## Claims

1. Electrical device comprising a substrate, a pair of electrodes arranged on the substrate and a functional layer arranged between the pair of electrodes, said functional layer comprising a functional domain being capable of transforming an external stimulus into an electrical signal or vice versa, **characterized in that** at least two conductive domains are dispersed in the functional layer, said at least two conductive domains being separated from each other and formed in each case by a particle or an agglomerate of particles of a conducting or semiconducting material having a higher electrical conductivity than the material of the functional domain, each of the conductive domains forming an electrically conductive path on the functional domain.

2. Electrical device according to claim 1, the functional domain being formed of particles of a semiconducting material.

3. Electrical device according to claim 1 or 2, the particles of the functional domain having an average diameter ranging from 5 nm to 100 nm.

4. Electrical device according to any of the preceding claims, the particles of the conductive domains having an average diameter ranging from 3 nm to 50 nm.

5. Electrical device according to any of the preceding claims, the functional layer having a bulk thickness of less than 1000 nm.

6. Electrical device according to any of the preceding claims, said electrical device being a micro- or nano-device.

7. Electrical device according to any of the preceding claims, the particles of the conductive domains being made of a metal and/or a narrow band gap metal oxide.

8. Electrical device according to any of the preceding claims, the particles of the functional domain being made of SnO₂ or TiO₂.

9. Electrical device according to any of the preceding claims, the conductive domains being arranged between the substrate and the functional domain.

10. Electrical device according to any of the preceding claims, the substrate being an electrically isolating substrate.

11. Electrical device according to any of the preceding claims, the electrodes being connected to a power supply unit.

12. Process for preparing an electrical device according to any of the preceding claims, said process comprising the steps of
a) providing a substrate,
b) producing a vapour and/or an aerosol of the particles of the conductive domains,
c) producing a vapour and/or an aerosol of the particles of the functional domain, and
d) forming a functional layer by depositing the particles of the conductive domains and the functional domain on the substrate.

13. Process according to claim 12 wherein the vapour and/or the aerosol is produced by flame spray combustion and/or flame spray pyrolysis of a precursor of the material of the conductive domains and/or the functional domain.

14. Process according to claim 12 or 13 wherein the particles of the conductive domains and/or the particles of the functional domain are annealed after deposition on the substrate.

15. Use of the electrical device according to any of claims 1 to 11 in an electrical circuit.

16. Use according to claim 15 wherein the electrical circuit is comprised in a gas sensor, a solar cell, an actuator, a fuel cell or a battery.
